# EUROPEAN PATENT APPLICATION

(11) **EP 3 031 956 A1**
(43) Date of publication of application: **15.06.2016**
(21) Application number: 14197083.0
(22) Date of filing: 10.12.2014
(51) Int. Cl.: C25B 15/08, B01D 53/86, C01B 31/18, C25B 1/00

(54) **A process for the preparation of ultra-high purity carbon monoxide**

(71) Applicant: Haldor Topsøe A/S, 2800 Kgs. Lyngby (DK)
(72) Inventor: Jakobsson, Niklas Bengt, 26023 Kågeröd (SE); Friis Pedersen, Claus, DK-2720 Vanløse (DK)
(74) Representative: Haldor Topsøe A/S

(57) **Abstract**

Ultra-high purity carbon monoxide is prepared by electrolysis of pre-treated food grade carbon dioxide in a solid oxide electrolysis cell stack by mixing food grade carbon dioxide with a minor amount of oxygen and heating the mixture, passing the heated mixture through a catalytic oxidation reactor, feeding the hydrocarbon-free effluent from the catalytic oxidation reactor to a drying unit to remove the water to a maximum residual content of 1-3 ppmv and feeding the dry, hydrocarbon-free carbon dioxide stream from the drying unit to the fuel side of the solid oxide electrolysis cell stack with an applied current. Excess oxygen is transported to the oxygen side of the stack, and the product stream from the solid oxide electrolysis cell stack is subjected to a separation procedure to remove carbon dioxide from the carbon monoxide product.

## Description

The present invention relates to a novel process for the preparation of ultra-high purity carbon monoxide (CO). More specifically, the invention concerns the preparation of a specially treated carbon dioxide (CO₂) feed gas for use in a solid oxide electrolysis cell (SOEC) stack to obtain a CO product with ultra-high purity.

A solid oxide electrolysis cell is a solid oxide fuel cell (SOFC) run in reverse mode, which uses a solid oxide or ceramic electrolyte to produce e.g. oxygen and hydrogen gas by electrolysis of water. It can also be used to produce CO from carbon dioxide (CO₂), which is led to the fuel side, i.e. the cathode, of the SOEC or SOEC stack with an applied current. As current is applied, the CO₂ is converted to CO, thereby providing an output stream with a high concentration of CO:

2 CO₂ (cathode) -> 2 CO (cathode) + O₂ (anode)

Excess oxygen is transported to the oxygen side, i.e. the anode, of the SOEC, and optionally air, nitrogen or CO₂ is used to flush the oxygen side. Afterwards the product stream from the SOEC, containing CO mixed with CO₂, is subjected to a separation process such as pressure swing adsorption (PSA), temperature swing adsorption (TSA), membrane separation, cryogenic separation or liquid scrubber technology, such as wash with N-methyl-diethanolamine (MDEA) to separate CO₂ from the CO product. PSA is especially suited for the production of high purity CO.

Carbon monoxide of high purity is an important raw material for the synthesis of chemicals. Most reactions for the synthesis of chemicals require high temperatures as well as high pressures, and therefore the CO used should have the lowest possible content of carbon dioxide (CO₂) which corrodes the reactor by oxidation. Additionally, CO₂ may limit the equilibrium conversion of the reaction in which the produced CO takes part. CO₂ may also inhibit the kinetics of the reaction where CO is used.

In some situations, the purity of the carbon monoxide has to be extremely high. This is for example the case within the semiconductor industry, where the requirements with regard to CO gas purity are very strict. In fact, a purity of up to 99.995 % may be required, meaning that maximum concentrations of 10 ppm N₂, 15 ppm CO₂, 6 ppm O₂, 1 ppm H₂O, 1 ppm H₂ and 3 ppm CH₄ are allowed. Table 1 below shows the maximum allowable impurity concentrations for CO with purities of 99.95 % and 99.995 %, respectively.

**Table 1**

| Maximum allowable impurity concentrations for pure carbon monoxide | | |
|---|---|---|
| CO purity grade, % | 99.95 % | 99.995 % |
| oxygen | ≤ 100 ppmv | ≤ 6 ppmv |
| nitrogen | ≤ 250 ppmv | ≤ 10 ppmv |
| carbon dioxide | ≤ 50 ppmv | ≤ 15 ppmv |
| total hydrocarbons | ≤ 3 ppmv | |
| methane | | ≤ 3 ppmv |
| water | ≤ 3 ppmv | ≤ 1 ppmv |
| iron pentacarbonyl | ≤ 1 ppmv | ≤ 0.5 ppmv |
| hydrogen | | ≤ 1 ppmv |

Obtaining a purity of 99.995 % is not possible without extraordinary and extensive purification measures for CO prepared by a syngas-based synthesis route. Moreover it is also not possible for CO prepared using a solid oxide electrolysis cell (SOEC) stack unless extra purification steps are taken.

Since CO₂ is the starting material for the synthesis of CO in a solid oxide electrolysis cell, it would seem obvious to use very pure CO₂ as starting material or to purify CO₂ sufficiently to make it suitable for such use. Therefore, in the prior art attempts have been made to find methods to CO₂ purification for various purposes. Thus, US 6,962,629 describes purification of carbon dioxide by catalytic oxidation, where near-critical, critical or supercritical carbon dioxide is exposed to at least one catalyst at a temperature controlled to produce carbon dioxide of the desired purity, which is less than 10 ppb of non-volatile organic residues. However, this US patent does not deal with the removal of volatile impurities, i.e. gases.

EP 0 952 111 concerns a system for the removal of traces, i.e. ppm levels, of contaminants in the form of hydrocarbon and sulfur compounds from CO₂. This involves the use of a sulfur tolerant catalytic oxidation system which oxidizes the contaminants to carbon dioxide, water and sulfur dioxide which are subsequently removed by adsorption and/or absorption techniques. The system is applicable to both carbon dioxide production facilities and for on-site CO₂ purification for end-users.

In US 6,224,843, a method for the production of pure CO₂ from a CO₂ off-gas stream from ethylene glycol production is described. This method is also based on catalytic oxidation.

Even if very pure, i.e. food grade, carbon dioxide (with a purity as specified in Table 2 below) was used as feed for the synthesis of CO in a solid oxide electrolysis cell stack, it would still not be possible to obtain a carbon monoxide end product with a purity of 99.995 % unless extra purification steps would have to be taken, because any traces of different hydrocarbons, which are found even in food grade CO₂, will turn into hydrogen and CO in the SOEC stack, thereby producing more than the requisite maximum of 1 ppm hydrogen.

**Table 2**

| Maximum allowable impurity concentrations for food grade carbon dioxide | |
|---|---|
| Component | Maximum concentration |
| Moisture (water) | 50 ppmv |
| Ammonia | 2.5 ppmv |
| Oxygen | 30 ppmv |
| Nitrogen oxides (NO/NO₂) | 2.5 ppmv each |
| Total volatile hydrocarbons (calculated as methane) | 50 ppmv, of which max 20 ppmv non-methane HCs |
| Carbon monoxide | 10 ppmv |
| Methanol | 10 ppmv |

To obtain an ultra-high purity carbon monoxide product by SOEC stack electrolysis of CO₂ without having to take extra purification steps, the challenge lies in limiting the content of water and hydrogen in the product CO gas. While the CO₂ feed gas can be dried to eliminate water, any traces of hydrocarbons will turn into hydrogen and CO in the SOEC stack as mentioned above, thereby exceeding the allowed maximum of 1 ppm hydrogen in the product CO gas. Furthermore, a methanation activity will also occur in the stack, which may result in the threshold level for methane in the gas being exceeded.

It has now turned out that it is possible to use food grade CO₂ as feed for an SOEC stack and obtain ultra-high purity CO, if a small amount of pure oxygen is mixed with the feed of food grade CO₂ and the resulting mixed stream is led to a catalytic oxidation unit, where the hydrocarbons in the stream are oxidized to CO₂ and water. The water is removed in a drying unit downstream from the catalytic oxidation unit, leaving dry, hydrocarbon-free CO₂ to be fed to the SOEC stack.

This way it has become possible to use food grade CO₂ as feed for an SOEC stack and thereby obtain CO with a purity of 99.995 %.

The present invention therefore relates to a process for the preparation of ultra-high purity carbon monoxide by electrolysis of pre-treated food grade carbon dioxide in a solid oxide electrolysis cell stack, said process comprising the following steps:
- mixing food grade carbon dioxide with a minor amount of oxygen and heating the mixture,
- passing the heated mixture through a catalytic oxidation reactor, wherein the hydrocarbons in the mixture are oxidized to carbon dioxide and water,
- feeding the hydrocarbon-free effluent from the catalytic oxidation reactor to a drying unit to remove the water to a maximum residual content of 1-3 ppmv and
- feeding the dry, hydrocarbon-free carbon dioxide stream from the drying unit to the fuel side of the solid oxide electrolysis cell stack with an applied current,
wherein excess oxygen is transported to the oxygen side of the stack, optionally using carbon dioxide, air or nitrogen to flush the oxygen side, and wherein the product stream from the solid oxide electrolysis cell stack is subjected to a separation procedure to remove carbon dioxide from the carbon monoxide product.

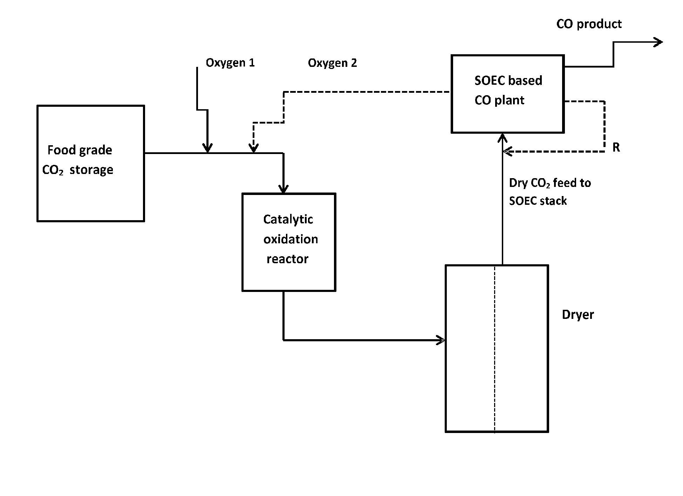

The progress of the process according to the invention is illustrated in the appended figure, where food grade CO₂ from storage is mixed with a minor amount of pure oxygen, either from a gas bottle (Oxygen 1) or from the oxygen side of the SOEC (Oxygen 2) or both. The mixture is then passed through a catalytic oxidation reactor where the hydrocarbons contained in the CO₂ stream are oxidized to CO₂ and water. In a drying unit, more specifically a dryer of molecular sieve type, placed downstream from the catalytic reactor, the water is removed down to a very low residual water content, leaving a dry CO₂ feed stream with extremely low levels of water and hydrocarbons to be fed to the fuel side of an SOEC based CO plant, optionally together with a purification off-gas recycle (R). The CO product from the plant has the required purity of 99.995 %.

As catalyst for the catalytic oxidation, a classical catox catalyst may be used. It consists of Pt and/or Pd on an alumina carrier. The required oxygen for the catalytic oxidation may, as already mentioned, be taken from the oxygen side of the SOEC stack.

The water content is preferably removed at the elevated pressure given by the CO₂ storage vessel.

The surplus of oxygen to be fed to the oxygen side of the SOEC stack should be moderate due to oxidation concerns on the fuel side of the stack. A level of between 150 and 250 ppm in the CO₂ feed to the catalytic oxidation is suitable.

In the SOEC plant the CO₂ feed stream can be mixed with the PSA recycle stream (CO and CO₂), and thus any residual oxygen will be consumed in the SOEC inlet section.

The off-gas from the separation process in the plant downstream of the SOEC stack can be mixed with the CO₂ feed upstream from the SOEC stack. Thereby, advantages in stack operation may be obtained.

The drying of the CO₂ feed gas to eliminate water can advantageously be done in a twin vessel dehydrator designed for automatic regeneration (one vessel operating, the other regenerating, each charged with a desiccant) and equipped with built-in heating elements and necessary instruments for the verification of correct regeneration conditions. A typical dehydrator of this kind with a gas flow of 400 kg/h has a total cycle time of 16 hours (8 hours of operation, 7.5 hours of regeneration and 0.5 hours of pressure buildup and standby). Each vessel is charged with 100 kg of the preferred desiccant, which has an estimated lifetime of approximately 12000 hours.

## Claims

1. A process for the preparation of ultra-high purity carbon monoxide by electrolysis of pre-treated food grade carbon dioxide in a solid oxide electrolysis cell stack, said process comprising the following steps:
- mixing food grade carbon dioxide with a minor amount of oxygen and heating the mixture,
- passing the heated mixture through a catalytic oxidation reactor, wherein the hydrocarbons in the mixture are oxidized to carbon dioxide and water,
- feeding the hydrocarbon-free effluent from the catalytic oxidation reactor to a drying unit to remove the water to a maximum residual content of 1-3 ppmv and
- feeding the dry, hydrocarbon-free carbon dioxide stream from the drying unit to the fuel side of the solid oxide electrolysis cell stack with an applied current,
wherein excess oxygen is transported to the oxygen side of the stack, optionally using carbon dioxide, air or nitrogen to flush the oxygen side, and wherein the product stream from the solid oxide electrolysis cell stack is subjected to a separation procedure to remove carbon dioxide from the carbon monoxide product.

2. The process according to claim 1, wherein a catalyst consisting of Pt and/or Pd on an alumina carrier is used for the catalytic oxidation.

3. The process according to claim 1, wherein the oxygen required for the catalytic oxidation is taken from the oxygen side of the SOEC stack.

4. The process according to claim 1, wherein the drying of the carbon dioxide feed gas to eliminate water is done in a twin vessel dehydrator designed for automatic regeneration, where one vessel is operating while the other is regenerating, each vessel being charged with a desiccant.

5. The process according to any of the preceding claims, wherein the off-gas from the separation process in the plant downstream of the SOEC stack is mixed with the CO₂ feed upstream from the SOEC stack.
